# EUROPEAN PATENT SPECIFICATION

(11) **EP 4 179 609 B1**
(45) Date of publication and mention of the grant of the patent: **02.09.2026**
(21) Application number: 20746823.2
(22) Date of filing: 09.07.2020
(51) Int. Cl.: H02K 1/2726, H02K 7/00, H02K 1/28

(54) **MACHINE WITH PARAMAGNETIC SHELL AND MAGNET**
MASCHINE MIT PARAMAGNETISCHER SCHALE UND MAGNET
MACHINE À ENVELOPPE PARAMAGNÉTIQUE ET AIMANT

(43) Date of publication of application: 17.05.2023
(73) Proprietor: Aerojet Rocketdyne, Inc., Melbourne, FL 32919 (US)
(72) Inventor: CHILCOAT, Thaddeus, Sacramento, California 95813-6000 (US); GROTA, Steven P., Sacramento, California 95813-6000 (US); TELLIER, James, Sacramento, California 95813-6000 (US)
(74) Representative: Dehns
(86) International application number: PCT/US2020/041378
(87) International publication number: WO 2022/010482

(56) References cited:
- WO-A1-2019/141035
- DE-A1- 3 922 123
- US-B1- 6 331 214
- US-B2- 8 569 920

## Description

### BACKGROUND

Turbomachines are well known and used in a variety of applications, such as pumps. One type of turbomachine includes a stator that can be electrically energized to rotationally drive a rotor.

US 8,569,920 discloses a small electric motor.

WO 2019/141035 discloses a rotor shaft assembly, a rotor, and a motor.

### SUMMARY

A machine according to an exemplary aspect of the present invention is provided in accordance with claim 10.

In a further embodiment of the foregoing machine, the paramagnetic shell is selected from a titanium-based alloy or an aluminum-based alloy.

In a further embodiment of any of the foregoing machines, the shaft includes an elongated stem portion extending from the paramagnetic shell. The paramagnetic shell defines a first outer diameter and the elongated stem portion defines a second outer diameter that is less than the first outer diameter.

In a further embodiment of any of the foregoing machines, the elongated stem and the paramagnetic shell are of single-piece construction.

In a further embodiment of any of the foregoing machines, the magnet includes at least one flat side.

In a further embodiment of any of the foregoing machines, the magnet includes first and second parallel flat sides.

In a further embodiment of any of the foregoing machines, the magnet and the cavity are of matching cross-sectional shapes.

In a further embodiment of any of the foregoing machines, the magnet and the cavity are of matching stadium cross-sectional shapes.

In a further embodiment of any of the foregoing machines, the magnet includes a center bore.

In a further embodiment of the any of the foregoing machines, the machine includes a housing in which the rotor is disposed and an impeller that is coupled with the shaft.

A rotor for a machine according the present invention is provided in accordance with claim 1.

In a further embodiment of the foregoing rotor, the paramagnetic shell is selected from a titanium-based alloy or an aluminum-based alloy.

In a further embodiment of any of the foregoing rotors, the shaft includes an elongated stem portion extending from the paramagnetic shell. The paramagnetic shell defines a first outer diameter and the elongated stem portion defining a second outer diameter that is less than the first outer diameter.

In a further embodiment of any of the foregoing rotors, the magnet and the cavity are of matching cross-sectional shapes.

In a further embodiment of any of the foregoing rotors, the elongated stem and the paramagnetic shell are of single-piece construction.

In a further embodiment of any of the foregoing rotors, the magnet includes first and second parallel flat sides.

A machine according to another exemplary aspect of the present disclosure is provided in accordance with claim 12.

In a further embodiment of the foregoing machine, the magnet and the cavity are of matching cross-sectional shapes, and the paramagnetic metallic alloy shell is selected from a titanium-based alloy or an aluminum-based alloy.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a turbomachine.
Figure 2A illustrates a sectioned view of the shaft of the turbomachine.
Figure 2B illustrates an expanded view of the shaft.
Figure 3 illustrates an axial view into a cavity of the shaft.

### DETAILED DESCRIPTION

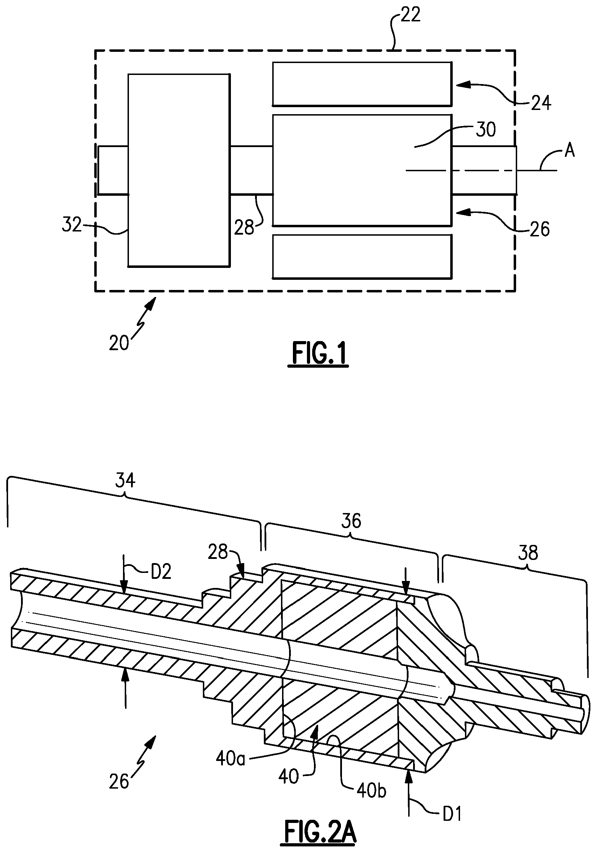

Figure 1 schematically illustrates an example machine 20. In this example, the machine 20 is a pump, however, it is to be understood that in addition to pumps the examples herein are also applicable to other types of machines.

In general, the machine 20 includes an outer housing 22 in which a stator 24 and rotor 26 are mounted. The stator 24 is fixed about an axis A, which is the rotational axis of the rotor 26. The rotor 26 is comprised of a shaft 28 and a magnet 30. The shaft may be supported on bearings (not shown). The magnet 30 is a permanent magnet, such as a rare earth magnet. An impeller 32 is coupled on the shaft 30 for co-rotation therewith. The stator 24 includes a coil that may be energized by an electric current to rotationally energize the magnet 30 and thereby rotate the shaft 28 and impeller 32. The system can be reversed such that the impeller is replaced by a turbine and the magnet can energize the coil in the stator to generate an electrical current.

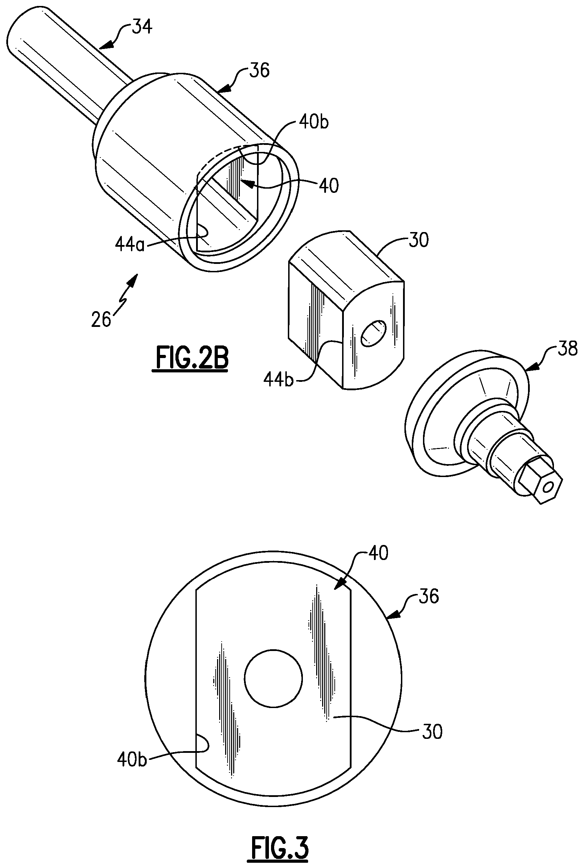

Figure 2A illustrates a sectioned view of an example of the rotor 26, and Figure 2B illustrates an expanded view of the rotor 26. The shaft 28 of the rotor 26 includes an elongated stem portion 34, a paramagnetic shell 36, and a cap 38. As shown, the shaft 28 includes a central bore that may be used for conveying coolant, although solid designs and draw bolt designs are also contemplated. The stem portion 34 is relatively small in diameter in comparison to the paramagnetic shell 36. The paramagnetic shell 36 defines a first outer diameter D1, and the elongated stem portion 34 defines a second outer diameter D2 that is less than the first outer diameter D1.

In this example, the paramagnetic shell 36 and the stem portion 34 are of single-piece construction, which may facilitate enhancing strength and reducing performance variations in comparison to multi-piece configurations. For example, the paramagnetic shell 36 and the stem portion 34 are a monolithic body. The monolithic body is a single, continuous piece, as opposed to a collection of functional parts that are bonded, secured, or fused together in joints. For example, a monolithic body may be formed by casting, additive manufacturing, and/or machining. The paramagnetic shell 36 and the stem portion 34 are formed of a paramagnetic alloy, such as but not limited to, titanium-based alloys or aluminum-based alloys.

The paramagnetic shell 36 defines a cavity 40 therein. The cavity 40 is bound by an axial wall 40a and a radial wall 40b. The opposed axial side is bound by the cap 38. Together, the axial wall 40a, the radial wall 40b, and the cap 38 define the shape of the cavity 40. Optionally, if infiltration of working fluid into the cavity 40 is undesired, a seal may be provided around the perimeter of the cap 38 for hermetically sealing the cavity 40.

Referring also to Figure 3 that illustrates an axial view into the cavity 40. The magnet 30 is disposed in the cavity 40. The magnet 30 is of complementary shape to the cavity 40 such that the magnet 30 and paramagnetic shell 40 are rotationally interlocked. The term "complementary" means that the magnet 30 is shaped such that it fits closely in the cavity 40 with limited free motion. For example, the shape of the magnet 30 may match that of the cavity 40 such that substantially all of the outer surfaces of the magnet 30 abut the walls 40a/40b and cap 38. Relatively small gaps for tolerances and fit may be provided. The magnet 30 is "free-floating" in the cavity 40, secured in place only by the bounds provided by the walls 40a/40b and the cap 38. In this regard, the cap 38 serves for axial retention to capture the magnet 30 after it is installed into the cavity 40. In further examples not covered by the invention, one or more fastening mechanisms are used to facilitate retention of the magnet 30 in the cavity 40. For example, a separate tie bolt may be used to fasten the magnet 30 and/or the paramagnetic shell 40 may have fastening features, such as but not limited to, threads.

As shown, the cavity 40 and the magnet 30 have matching stadium cross-sectional shapes, represented at 44a and 44b, respectively. The stadium cross-sectional shape has two flat, parallel or substantially parallel sides that are bound with curved ends, such as semi-circles. In alternate examples, the magnet 30 has at least one flat side. The shape of the cavity 40 and the magnet 30 may be modified as long as they are of complimentary shape and rotationally interlock. Other example shapes include, but are not limited to, oval and rectangle.

During operation of the machine 20, the stator 24 is energized to energize the magnet 30. In response, the magnet 30 rotates about axis A. Due to the rotational interlocking of the magnet 30 with the paramagnetic shell 36, the rotational energy of the magnet 30 imparts torque on the paramagnetic shell 36 thereby causing rotation of the rotor 26 (and impeller 32). For instance, the paramagnetic shell 36 reacts shaft 28 bending loads and transmits magnet 30 torque due to stator 24 electric field interaction and reacts rotating assembly bending loads so that the magnet 30 only sees primarily the torque contact load transmitted to the paramagnetic shell 36.

The paramagnetic shell 36 is located between the stator 24 and the magnet 30 and, therefore, is in the magnetic field generated by the stator 24. However, the paramagnetic character of the shell 36 facilitates limiting magnetic interference and losses due to eddy currents. Additionally, the paramagnetic shell 36 may be relatively thin to further reduce interference. As an example, at its thinnest, the paramagnetic shell 36 has a wall thickness of less than about 0.5 millimeters up to about 7 millimeters. The actual selected thickness may take into account the material, application requirements, stresses resulting from speeds and size, and field strength. Moreover, titanium-based alloys, such as but not limited to Ti-6Al-4V, may also provide good strength across a wide range of operating temperatures, resistance to hydrogen embrittlement, and good performance at cryogenic temperatures with exposure to liquid hydrogen or liquid oxygen.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure, solely limited by the appended claims. The scope of legal protection given to this disclosure can only be determined by studying the following claims.

## Claims

1. A rotor (26) for a machine (20), comprising:
a shaft (28) having:
a paramagnetic shell (36) that defines a cavity (40) therein;
a magnet (30) at least partially disposed in the cavity (40), the magnet (30) being free-floating in the cavity (40) and being of complementary shape to the cavity (40) such that the magnet (30) and paramagnetic shell (36) are rotationally interlocked; and
a cap (38) enclosing the magnet (30) in the cavity (40).

2. The rotor (26) as recited in claim 1, wherein the paramagnetic shell (36) is selected from a titanium-based alloy or an aluminum-based alloy.

3. The rotor (26) as recited in claim 1 or 2, wherein the shaft (28) includes an elongated stem portion (34) extending from the paramagnetic shell (36), the paramagnetic shell (36) defining a first outer diameter (D1) and the elongated stem portion (34) defining a second outer diameter (D2) that is less than the first outer diameter (D1).

4. The rotor (26) as recited in claim 3, wherein the elongated stem portion (34) and the paramagnetic shell (36) are of single-piece construction.

5. The rotor (26) as recited in any preceding claim, wherein the magnet (30) includes at least one flat side.

6. The rotor (26) as recited in any preceding claim, wherein the magnet (30) includes first and second parallel flat sides.

7. The rotor (26) as recited in any preceding claim, wherein the magnet (30) and the cavity (40) are of matching cross-sectional shapes.

8. The rotor (26) as recited in any preceding claim, wherein the magnet (30) and the cavity (40) are of matching stadium cross-sectional shapes.

9. The rotor (26) as recited in any preceding claim, wherein the magnet (30) includes a center bore.

10. A machine (20) comprising:
a stator (24); and
the rotor (26) of any preceding claim, wherein the rotor (26) is rotatable with respect to the stator (24).

11. The machine (20) as recited in claim 10, further comprising a housing in which the rotor (26) is disposed and an impeller (32) that is coupled with the shaft (28).

12. A machine comprising:
a stator; and
the rotor of any of claims 1 to 9, wherein:
the paramagnetic shell is a metallic alloy; and
the magnet is rotationally interlocked with the paramagnetic shell such that when the stator energizes the magnet rotational energy of the magnet transmits to the paramagnetic shell and rotates the rotor.

## Patentansprüche

1. Rotor (26) für eine Maschine (20), umfassend:
eine Welle (28), aufweisend:
eine paramagnetische Schale (36), die darin einen Hohlraum (40) definiert;
einen Magneten (30), der zumindest teilweise in dem Hohlraum (40) angeordnet ist, wobei der Magnet (30) frei beweglich in dem Hohlraum (40) angeordnet ist und eine zum Hohlraum (40) komplementäre Form aufweist, derart, dass der Magnet (30) und die paramagnetische Schale (36) rotationsmäßig ineinandergreifen; und
eine Kappe (38), die den Magneten (30) in dem Hohlraum (40) umschließt.

2. Rotor (26) nach Anspruch 1, wobei die paramagnetische Schale (36) aus einer titanbasierten Legierung oder einer aluminiumbasierten Legierung ausgewählt ist.

3. Rotor (26) nach Anspruch 1 oder 2, wobei die Welle (28) einen verlängerten Schaftabschnitt (34) einschließt, der sich von der paramagnetischen Schale (36) erstreckt, wobei die paramagnetische Schale (36) einen ersten Außendurchmesser (D1) definiert und der verlängerte Schaftabschnitt (34) einen zweiten Außendurchmesser (D2) definiert, der kleiner als der erste Außendurchmesser (D1) ist.

4. Rotor (26) nach Anspruch 3, wobei der verlängerte Schaftabschnitt (34) und die paramagnetische Schale (36) einstückig gebildet sind.

5. Rotor (26) nach einem vorstehenden Anspruch, wobei der Magnet (30) zumindest eine Flachseite einschließt.

6. Rotor (26) nach einem vorstehenden Anspruch, wobei der Magnet (30) erste und zweite parallele Flachseiten einschließt.

7. Rotor (26) nach einem vorstehenden Anspruch, wobei der Magnet (30) und der Hohlraum (40) übereinstimmende Querschnittsformen aufweisen.

8. Rotor (26) nach einem vorstehenden Anspruch, wobei der Magnet (30) und der Hohlraum (40) übereinstimmende Stadionquerschnittsformen aufweisen.

9. Rotor (26) nach einem vorstehenden Anspruch, wobei der Magnet (30) eine zentrale Bohrung einschließt.

10. Maschine (20), umfassend:
einen Stator (24); und
den Rotor (26) nach einem vorstehenden Anspruch, wobei der Rotor (26) gegenüber dem Stator (24) drehbar ist.

11. Maschine (20) nach Anspruch 10, die weiter ein Gehäuse, in dem der Rotor (26) angeordnet ist, und ein Laufrad (32) umfasst, das mit der Welle (28) gekoppelt ist.

12. Maschine, umfassend:
einen Stator; und
den Rotor nach einem der Ansprüche 1 bis 9, wobei:
die paramagnetische Schale eine Metalllegierung ist; und
der Magnet mit der paramagnetischen Schale derart rotationsmäßig ineinandergreift, dass, wenn der Stator den Magneten erregt, sich Rotationsenergie des Magneten auf die paramagnetische Schale überträgt und den Rotor dreht.

## Revendications

1. Rotor (26) pour une machine (20), comprenant :
un arbre (28) présentant :
une enveloppe paramagnétique (36) qui définit une cavité (40) à l'intérieur de celle-ci ;
un aimant (30) au moins partiellement disposé dans la cavité (40), l'aimant (30) flottant librement dans la cavité (40) et étant de forme complémentaire à la cavité (40) de sorte que l'aimant (30) et l'enveloppe paramagnétique (36) soient solidaires en rotation ; et
un couvercle (38) enfermant l'aimant (30) dans la cavité (40).

2. Rotor (26) tel que revendiqué dans la revendication 1, dans lequel l'enveloppe paramagnétique (36) est sélectionnée parmi un alliage à base de titane ou un alliage à base d'aluminium.

3. Rotor (26) tel que revendiqué dans la revendication 1 ou la revendication 2, dans lequel l'arbre (28) inclut une portion de tige allongée (34) s'étendant à partir de l'enveloppe paramagnétique (36), l'enveloppe paramagnétique (36) définissant un premier diamètre extérieur (D1) et la portion de tige allongée (34) définissant un deuxième diamètre extérieur (D2) qui est inférieur au premier diamètre extérieur (D1).

4. Rotor (26) tel que revendiqué dans la revendication 3, dans lequel la portion de tige allongée (34) et l'enveloppe paramagnétique (36) sont réalisées d'une seule pièce.

5. Rotor (26) tel que revendiqué selon une quelconque revendication précédente, dans lequel l'aimant (30) inclut au moins une face plane.

6. Rotor (26) tel que revendiqué selon une quelconque revendication précédente, dans lequel l'aimant (30) inclut des première et deuxième faces planes parallèles.

7. Rotor (26) tel que revendiqué selon une quelconque revendication précédente, dans lequel l'aimant (30) et la cavité (40) sont de formes de section transversale correspondantes.

8. Rotor (26) tel que revendiqué selon une quelconque revendication précédente, dans lequel l'aimant (30) et la cavité (40) sont de formes de section transversale en forme de stade correspondantes.

9. Rotor (26) tel que revendiqué selon une quelconque revendication précédente, dans lequel l'aimant (30) inclut un alésage central.

10. Machine (20) comprenant :
un stator (24) ; et
le rotor (26) selon une quelconque revendication précédente, dans laquelle le rotor (26) est rotatif par rapport au stator (24).

11. Machine (20) telle que revendiquée dans la revendication 10, comprenant en outre un boîtier dans lequel le rotor (26) est disposé et une roue à aubes (32) qui est couplée avec l'arbre (28).

12. Machine comprenant :
un stator ; et
le rotor selon l'une quelconque des revendications 1 à 9, dans laquelle :
l'enveloppe paramagnétique est un alliage métallique ; et
l'aimant est solidaire en rotation de l'enveloppe paramagnétique de sorte que lorsque le stator excite l'aimant, de l'énergie de rotation de l'aimant se transmet à l'enveloppe paramagnétique et fait tourner le rotor.
